# EUROPEAN PATENT SPECIFICATION

(11) **EP 3 747 667 B1**
(45) Date of publication and mention of the grant of the patent: **04.08.2021**
(21) Application number: 19178791.0
(22) Date of filing: 06.06.2019
(51) Int. Cl.: B60B 3/16, F16B 37/14, F16B 39/10

(54) **ANTI-UNSCREWING COVER SYSTEM FOR HEADS OF BOLTS USED TO SECURE A WHEEL RIM OF A COMMERCIAL VEHICLE**
SCHRAUBENLÖSESCHUTZABDECKSYSTEM FÜR KÖPFE VON BOLZEN ZUR SICHERUNG EINER RADFELGE EINES NUTZFAHRZEUGS
SYSTÈME DE COUVERCLE ANTI-DÉVISSAGE POUR TÊTES DE BOULONS UTILISÉ POUR FIXER SOLIDEMENT UNE JANTE DE ROUE D'UN VÉHICULE UTILITAIRE

(43) Date of publication of application: 09.12.2020
(73) Proprietor: Ruspa Officine S.P.A., 10070 Robassomero (IT)
(72) Inventor: DE RINALDIS, Fabio, 10136 TORINO (IT)
(74) Representative: Bongiovanni, Simone

(56) References cited:
- FR-A1- 2 897 014
- FR-A1- 2 897 124
- FR-A1- 3 021 718
- GB-A- 2 510 170

## Description

### TECHNICAL FIELD

The present invention relates to an anti-unscrewing cover system for heads of bolts used to secure a wheel rim of a commercial vehicle.

### BACKGROUND ART

Anti-unscrewing cover systems for heads of bolts used to secure a wheel rim of a commercial vehicle to a hub are known. In such systems, a plurality of cup-shaped cover elements are each suitable to couple with a respective head to cover it and protect it from external agents (water, mud, debris, hydrocarbons, etc.) which could potentially damage the bolt during vehicle use.

These systems are designed to protect the bolts from corrosion and oxidation in order to prevent the formation of metal oxides which can make it difficult to dismantle the bolt from the hub and thus replace the wheel.

The connection between the cover element and the screw head is generally made using flexible elements which contribute to apply a force to the bolt head.

For example, the Applicant's European patent EP-B-1.258.641 describes a cover element for a threaded connection element wherein a cup-shaped body defines an internal cavity coaxial to an axis and suitable to house at least an end portion of the threaded connection element. The cover element is provided with a plurality of elongated flexible appendages integral to the cup-shaped body, extending in directions substantially parallel to the axis and configured to exert radial pressure on the above-mentioned end portion to establish a stable connection between the cup-shaped body and the threaded connection element.

However, the cover elements used in known systems can become uncoupled from the heads due to vibrations generated while the vehicle is in motion. Furthermore, the heads themselves may also change their original position due to a bolt unscrewing process.

Anti-unscrewing systems are also known, which visually indicate the angular displacement of the cover element / head with respect to the mounting position; among these systems we point out the description in the British patent application GB2510170 which describes a safety device for connecting together wheel nut covers, which also serves as a rotation indicator device. The cover elements are connected to each other by respective safety devices to inhibit rotation of the wheel nuts. Each cover element is also equipped with a pointer which displays the angular position (and therefore the rotation with respect to an initial position) of the cover element and/or the nut.

Systems of the type described above are inconvenient and complex to install and comprise a large number of plastic parts interconnected by means of a snap-fit system.

In the sixth embodiment of its Figure 7, the document US2017326910 (A1**)** describes an anti-unscrewing system for bolt heads wherein a connector which connects the bolt heads comprises two identical bodies each of which couples to a respective head.

Each body is provided with a central aperture 64 which houses the nut head and two convex side portions provided with knurls suitable to match the knurls of adjacent bodies so that the connectors can connect all the nuts arranged along a circular path.

Each body is provided with a lock nut to prevent rotation of the body with respect to the head and with a lock status indicator which is green when locked and red when the body can be removed from the head.

In the embodiment of Figure 3, the patent FR 2 897 124 describes a device for immobilising a bolt head suitable to be mounted in the hole of a part wherein a flat plate provided with a hole in which the bolt head is axially locked is suitable to cooperate abutting against other adjacent plates in order to prevent angular movement of the heads. A further retaining device is known from FR 2 897 014 A.

### DISCLOSURE OF INVENTION

The object of the present invention is to provide an anti-unscrewing system which also performs the function of covering the heads of bolts used to secure a wheel rim of a commercial vehicle which is easy to install, has a simple structure and has a limited cost.

The preceding object is achieved by the present invention in that it relates to an anti-unscrewing cover system for the heads of bolts used to secure a wheel rim of a commercial vehicle to a hub and comprising a plurality of cover elements each suitable to couple with a respective head to cover it, the bolts being suitable to engage with respective through-holes arranged along a circular path of a portion of the wheel rim, **characterised in that** each cover element comprises: a tubular body defining an internal cavity coaxial to an axis and an integral appendage which extends radially from a front portion of a perimetric edge of the tubular body towards the outside of the tubular body; a cup-shaped cap element suitable to be housed inside the tubular body and defining an internal seat open towards the outside and suitable to house, in an angularly stable way, a respective head which couples with the cap element; said cup-shaped cap element being provided with flexible means which allow rotation of the tubular body with respect to the cap element according to a single direction of rotation; said appendage has an end portion of the cover which is configured to abut against a rear portion of the perimetric edge of the adjacent tubular body in such a way that the cover elements arranged on their respective heads form a continuous chain of cover elements arranged in contact with each other to create a crown of interconnected cover elements wherein each cover element exerts a force on the adjacent cover in such a way as to create a force which develops along said circular path which keeps the cover elements in contact with each other, all of which are slightly compressed; the crown of cover elements prevents the rotation and thus the unscrewing of the bolts.

### BRIEF DESCRIPTION OF THE DRAWINGS

The invention will now be illustrated with reference to the attached drawings which show a preferred non-limiting embodiment thereof wherein:
Figure 1 shows a partially exploded perspective view of an anti-unscrewing cover system for bolt heads, created in accordance with the dictates of the present invention;
Figure 2 shows a detail of the system in Figure 1, in enlarged scale and in a rear perspective view;
Figure 3 shows a wheel rim of a vehicle without the system of the present invention, in front view;
Figure 4 shows a wheel rim of a vehicle provided with the system of the present invention, in front view;
Figure 5 shows the detail of Figure 2, in longitudinal section;
Figure 6 shows the detail of Figure 2, in cross-section; and
Figure 7 is an additional front perspective view of the detail.

### BEST MODE FOR CARRYING OUT THE INVENTION

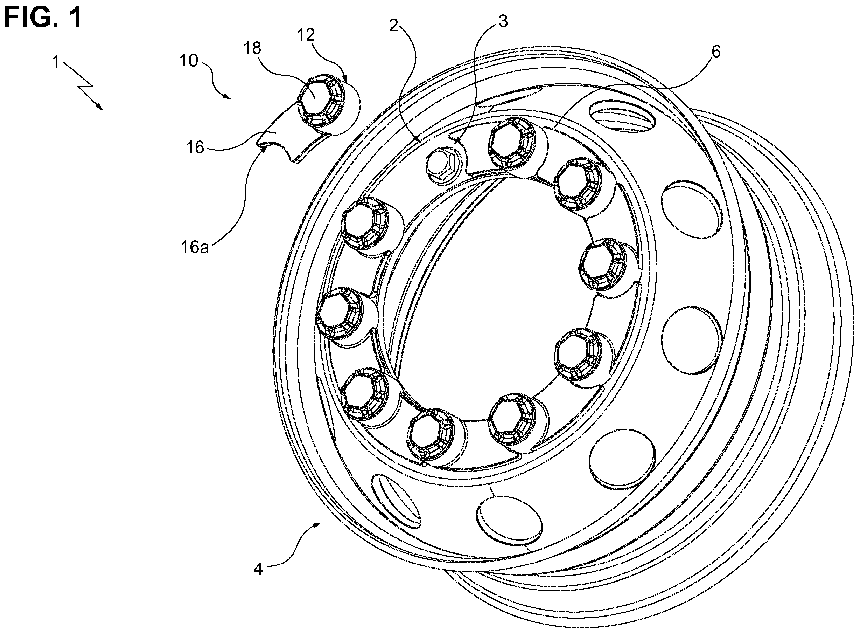

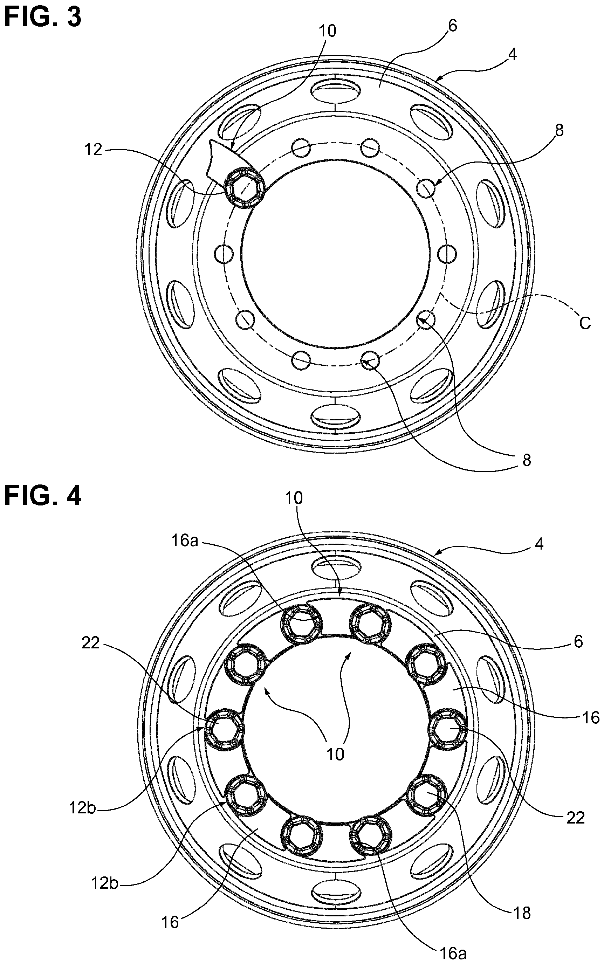

In **Figures 1** **and** **4** the number 1 designates, in its entirety, an anti-unscrewing cover system for the heads 3 (Figures 1, 3, 2) of bolts 2 used to secure a wheel rim 4 of a commercial vehicle (not shown) to a hub of the vehicle (not shown). The bolt 2 is made of metal and has a head 3 of known type with a hexagonal section.

The wheel rim 4 is also of a known type and comprises an annular front portion 6 in which a plurality of circular through-holes 8 are made (Figure 3), arranged along a circular path C and suitable to house respective bolts 2 in order to secure the wheel rim 4 to a hub of the vehicle (not shown).

The system 1 comprises a plurality of cover elements 10 each suitable to couple with a respective head 3 to cover it and protect it from external agents (water, mud, debris, hydrocarbons, etc.) which could potentially damage the bolt 2 while the vehicle (not shown) is in motion. This protects the bolts 2 from corrosion and prevents the formation of metal oxides which could make it difficult to remove the bolts 2 from the hub (not shown). The cover elements further assume an angularly stable position with respect to each other, preventing unscrewing of the bolts 2.

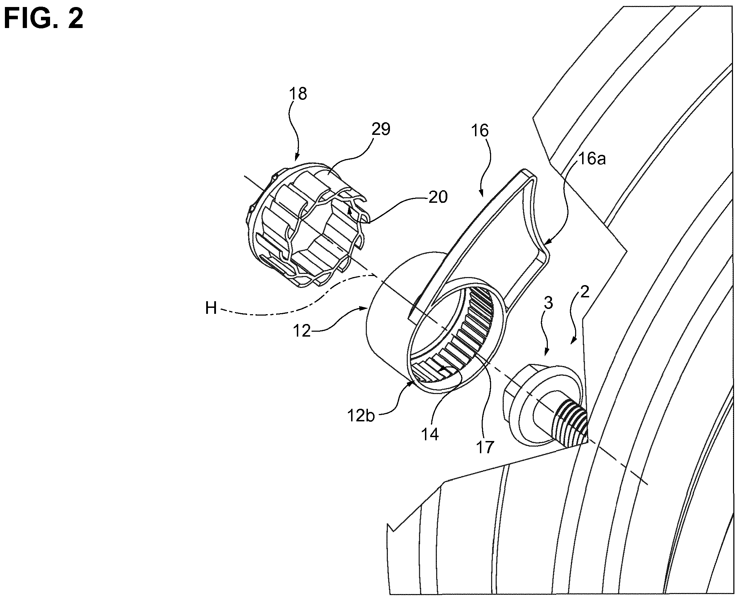

Each cover element 10 comprises:
a cylindrical tubular body 12 (shown in particular in Figure 2) defining an internal cylindrical seat 14 coaxial to an axis H and an integral appendage 16 which extends radially from a front portion of a perimetric edge 12b of the tubular body 12 towards the exterior of the tubular body 12; and
a cup-shaped cap element 18 suitable to be housed inside the cylindrical seat 14 of the tubular body 12.

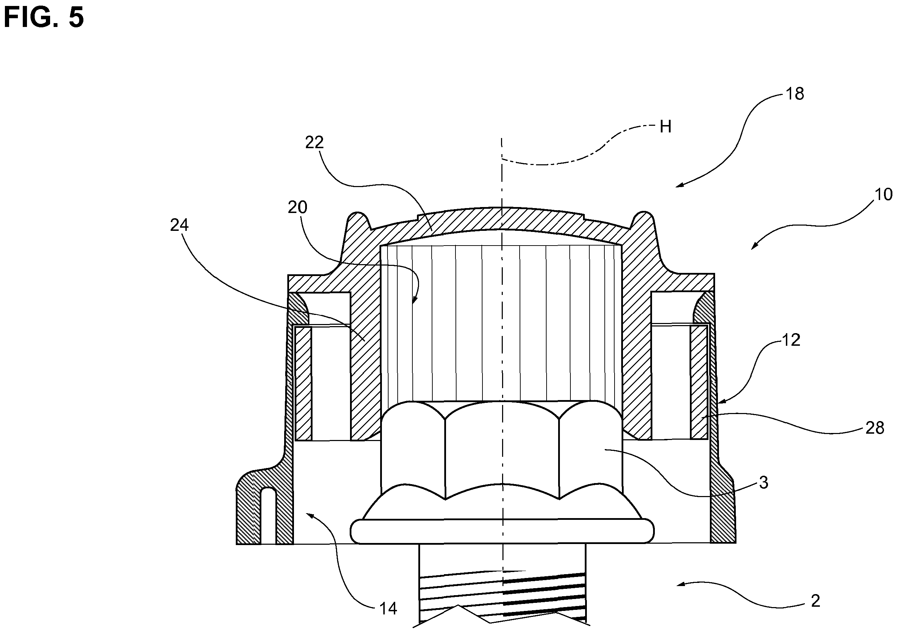

The cap element 18 defines an internal seat 20 which is open to the outside and which is suitable to house, in an angularly stable way, a respective head 3 (Figure 5) which couples with the cap element 18.

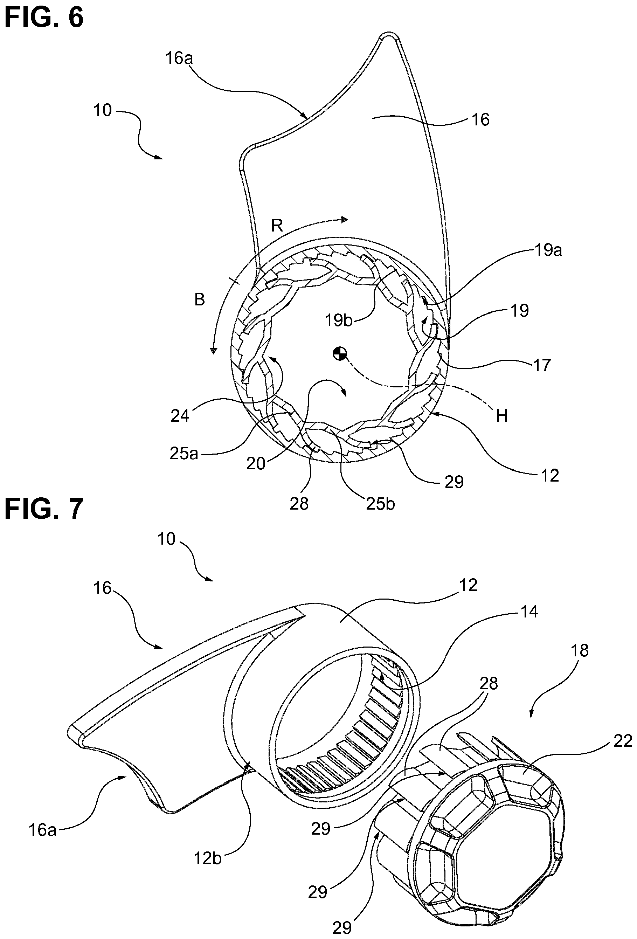

In greater detail, the cylindrical tubular body 12 has an inner wall on which a plurality of straight ridges 17 are arranged, these extend along the axis H and have a triangular section thus creating a plurality of grooves 19 (Figure 7) delimited by a locking wall 19a which extends in a radial direction (see Figure 6) and an inclined wall 19b which is inclined with respect to the locking wall.

The cap element 18 comprises a substantially circular flat base wall 22 which, in use, is suitable to be arranged transversely to the axis H (Figure 5) and a tubular wall 24 which is integral to the base wall 22 and which, in use, is coaxial to the H axis. The tubular wall 24 internally defines the internal seat 20, which is configured to house a corresponding head 3 in an angularly stable way.

In particular, in the embodiment example provided, the tubular wall 24 comprises a plurality of adjacent flat portions 25a, 25b (Figure 6) integral with each other, each flat portion forming an obtuse angle with respect to the adjacent portions to form the tubular wall 24.

In this way, the outside of the tubular wall 24 has a plurality of external edges from which respective flexible curved walls 28 extend radially (and therefore towards the outside of the cap element 18), equally spaced apart angularly with respect to the axis H.

Each flexible wall 28 has a C-shaped section along a plane transverse to the axis H and is provided with a free straight edge 29 parallel to the axis H, suitable to snap into a corresponding groove 19 (Figure 6), allowing rotation of the cylindrical tubular body 12 with respect to the cap element 18 according to a single direction of rotation R. Rotation of the cap element 18 according to the possible direction of rotation R involves the edge 29 sliding on the inclined walls 19b and a corresponding deflection of the flexible curved walls 28 towards the tubular wall 24; rotation of the cap element 18 according to an opposite direction B is not possible because the edge 29 abuts against the locking walls 19a.

The appendix 16, seen in plan view, is delimited by two curved sides, spaced apart by a distance substantially equal to the diameter of the tubular body 12, and by a C-shaped end side defining an end portion 16a which abuts against the rear portion of an adjacent tubular body 12.

In this way, the appendix 16 has an end portion 16a configured to abut against a rear portion of the perimetric edge 12b of an adjacent tubular body 12 in such a way that the cover elements 10 arranged on their heads 3 form a continuous chain of cover elements 10 arranged in contact with each other to create a crown of interconnected cover elements 10 (shown in Figure 4) which have fixed angular positions with respect to each other.

**In use,** the tubular body 12 and the cap element 18 are pre-assembled before they are used on the wheel and thus an operator inserts a cap element 18 into each tubular body 12, pushing it axially so that the flexible curved walls 28 flex towards the tubular wall 24 allowing the arrangement of each free straight edge 29 inside a respective groove 19.

The two elements thus become monolithic thanks to the interlocking described above, which allows rotation of the cap element 18 inside the tubular body 12 and inhibits its separation from the same (the section in Figure 5 shows the interlocking of the two elements).

Conveniently, the final operator will be supplied with the combined assembly, in other words with the cap element 18 mounted inside the tubular body 12.

During the assembly step, this assembly will be assembled with the appendix 16 facing outwards, in other words arranged in a radial direction and facing towards the exterior of the wheel rim 4.

Next, a first cover element 10 is rotated around the axis H and in the direction of rotation R until the end portion 16a abuts against the tubular body of an adjacent cover element. The operations carried out in this way are repeated for the adjacent cover element and then consecutively for all the cover elements, thus creating a continuous chain of cover elements arranged in contact with each other.

Assembly of the system 1 is therefore very easy. Furthermore, the cover elements are made from moulded plastic. The cost of these elements is very low. As regards the plastic material used, the cap element 18 can be made of nylon and the tubular body 12 of ABS.

## Claims

1. An anti-unscrewing cover system (1) for heads (3) of bolts (2) used to secure a wheel rim (4) of a commercial vehicle to a hub and comprising a plurality of cover elements (10) each of which is suitable to be coupled with a respective bolt head (3) to cover it, the bolts (2) being suitable to engage respective through-holes (8) arranged along a circular path (C) of a portion (6) of the wheel rim (4),
**characterised in that** each cover element (10) comprises:
a tubular body (12) defining an internal cavity (14) coaxial to an axis (H) and an integral appendix (16) which extends radially from a front portion of a perimetric edge (12b) of the tubular body (12) towards the exterior of the tubular body (12);
a cup-shaped cap element (18) suitable to be housed inside the tubular body and defining an internal seat open towards the outside and suitable to house, in an angularly stable way, a respective bolt head (3) which couples with the cap element;
said cup-shaped cap element (18) being provided with means of connection which allow rotation of the tubular body with respect to the cap element (18) according to a single direction of rotation (R);
said appendix (16) has an end portion (16a) configured to abut against a rear portion (12b) of the adjacent tubular body (12) in such a way that the cover elements (10) arranged on their respective bolt heads form a continuous chain of cover elements arranged in contact with each other to form a crown of interconnected cover elements (10) wherein each cover element exerts a force on the adjacent cover element in such a way as to produce a force which develops along said circular path (C) which keeps the cover elements (10), which are all slightly compressed, in contact with each other; the crown of cover elements prevents the rotation and thus the unscrewing of the bolts.

2. The anti-unscrewing cover system according to Claim 1, wherein said means of connection are of a flexible type.

3. The anti-unscrewing cover system according to Claim 2, wherein said flexible means of connection comprise a plurality of flexible curved walls (28) extending outwards from the cap element (18) and which are provided with free end edges (29) suitable to snap into respective grooves (19) made on an internal wall of said tubular body (12).

4. The anti-unscrewing cover system according to Claim 3, wherein the cylindrical tubular body (12) has an internal wall on which a plurality of straight ridges (17) are made, which extend along the axis H and have a triangular section thus creating said grooves (19) delimited by a locking wall (19a) which extends in a radial direction and an inclined wall (19b) inclined with respect to the locking wall (19a); the rotation of the cap element (18) according to the possible direction of rotation (R) involves the sliding of the free end edges (29) on the inclined walls (19b) and the related deflection of the flexible curved walls (28); rotation of the cap element (18) according to an opposite direction (B) is prevented because the free end edges (29) abut against the locking walls (19a).

5. The anti-unscrewing cover system according to any of the preceding claims, wherein said shaped cap element comprises a substantially circular flat base wall (22) which, in use, is suitable to be arranged transversely to said axis (H) and a tubular wall (24) which is integral to the base wall (22) and is suitable to be arranged, in use, coaxially to said axis (H); the tubular wall (24) internally defining said internal seat (20), which is configured to house a corresponding head (3) in an angularly stable way.

6. The anti-unscrewing cover system according to Claim 5, wherein the tubular wall comprises a plurality of adjacent flat portions (25a, 25b) integral with each other, each flat portion forming an obtuse angle with respect to the adjacent portions to form the tubular wall (24).

7. The anti-unscrewing cover system according to Claim 5 or 6 dependent on Claim 3, wherein the exterior of the tubular wall has a plurality of external edges (20a) from which the flexible curved walls (28) extend radially.

8. The anti-unscrewing cover system according to any of the preceding claims, wherein said end portion (16a) is C-shaped in plan view.

9. The anti-unscrewing cover system according to any of the preceding claims, wherein the appendix (16), in plan view, is delimited by two curved sides spaced apart by a distance substantially equal to the diameter of the tubular body (12) and by a C-shaped end side which defines the end portion.

## Patentansprüche

1. Losdrehsicherungsabdeckungssystem (1) für Köpfe (3) von Schrauben (2), die zum Befestigen einer Radfelge (4) eines Nutzfahrzeugs an einer Nabe verwendet werden, mit mehreren Abdeckelementen (10), von denen jedes dazu geeignet ist, mit einem entsprechenden Schraubenkopf (3) verbunden zu werden, um diesen abzudecken, wobei die Schrauben (2) dazu geeignet sind, mit entsprechenden Durchgangslöchern (8) in Eingriff zu kommen, die entlang eines kreisförmigen Pfades (C) eines Abschnitts (6) der Radfelge (4) angeordnet sind;
**dadurch gekennzeichnet, dass**
jedes Abdeckelement (10) aufweist:
einen rohrförmigen Körper (12), der einen sich koaxial zu einer Achse (H) erstreckenden inneren Hohlraum (14) und einen integralen Ansatz (16) definiert, der sich radial von einem vorderen Abschnitt eines Umfangsrands (12b) des rohrförmigen Körpers (12) vom rohrförmigen Körper (12) nach außen gerichtet erstreckt;
ein schalenförmiges Kappenelement (18), das dazu geeignet ist, im Inneren des rohrförmigen Körpers aufgenommen zu werden, und einen inneren Sitz definiert, der zur Außenseite hin offen und dazu geeignet ist, einen jeweiligen Schraubenkopf (3), der mit dem Kappenelement verbunden ist, auf eine winkelstabile Weise aufzunehmen,
wobei das schalenförmige Kappenelement (18) eine Verbindungseinrichtung aufweist, die eine Drehbewegung des rohrförmigen Körpers in Bezug auf das Kappenelement (18) in einer einzigen Drehrichtung (R) ermöglicht,
wobei der Ansatz (16) einen Endabschnitt (16a) aufweist, der dafür konfiguriert ist, an einem hinteren Abschnitt (12b) des benachbarten rohrförmigen Körpers (12) anzuliegen, so dass die auf ihren jeweiligen Schraubenköpfen angeordneten Abdeckelemente (10) eine kontinuierliche Kette von Abdeckelementen bilden, die in Kontakt miteinander angeordnet sind, um einen Kranz von miteinander verbundenen Abdeckelementen (10) zu bilden, wobei jedes Abdeckelement eine Kraft auf das benachbarte Abdeckelement derart ausübt, dass eine Kraft erzeugt wird, die sich entlang des kreisförmigen Pfades (C) entwickelt und die Abdeckelemente (10), die alle leicht zusammengedrückt sind, in Kontakt miteinander hält,
wobei der Kranz von Abdeckelementen die Drehbewegung und damit das Aufschrauben der Schrauben verhindert.

2. Losdrehsicherungsabdeckungssystem nach Anspruch 1, wobei die Verbindungseinrichtung flexibel ist.

3. Losdrehsicherungsabdeckungssystem nach Anspruch 2, wobei die flexible Verbindungseinrichtung mehrere flexible gekrümmte Wände (28) aufweist, die sich vom Kappenelement (18) nach außen erstrecken und Ränder (29) an freien Enden aufweisen, die dazu geeignet sind, in entsprechende Nuten (19) einzurasten, die auf einer Innenwand des rohrförmigen Körpers (12) ausgebildet sind.

4. Losdrehsicherungsabdeckungssystem nach Anspruch 3, wobei der rohrförmige Körper (12) eine Innenwand aufweist, auf der mehrere gerade Stege (17) ausgebildet sind, die sich entlang der Achse H erstrecken und einen dreieckigen Abschnitt aufweisen, wodurch die Nuten (19) gebildet werden, die durch eine Verriegelungswand (19a), die sich in einer radialen Richtung erstreckt, und eine geneigte Wand (19b) begrenzt sind, die in Bezug auf die Verriegelungswand (19a) geneigt ist; wobei die Drehbewegung des Kappenelements (18) gemäß der möglichen Drehrichtung (R) ein Gleiten der Ränder (29) der freien Enden auf den geneigten Wänden (19b) und eine damit verbundene Durchbiegung der flexiblen gekrümmten Wände (28) beinhaltet; wobei die Drehbewegung des Kappenelements (18) in einer entgegengesetzten Richtung (B) verhindert wird, da die Ränder (29) der freien Enden an den Verriegelungswänden (19a) anliegen.

5. Losdrehsicherungsabdeckungssystem nach einem der vorhergehenden Ansprüche, wobei das geformte Kappenelement aufweist: eine im Wesentlichen kreisförmige flache Basiswand (22), die im Gebrauch dazu geeignet ist, quer zu der Achse (H) angeordnet zu werden, und eine rohrförmige Wand (24), die mit der Basiswand (22) integral ausgebildet und dazu geeignet ist, im Gebrauch koaxial zur Achse (H) angeordnet zu werden, wobei die rohrförmige Wand (24) innen den inneren Sitz (20) definiert, der dafür konfiguriert ist, einen entsprechenden Kopf (3) auf eine winkelstabile Weise aufzunehmen.

6. Losdrehsicherungsabdeckungssystem nach Anspruch 5, wobei die rohrförmige Wand mehrere benachbarte flache Abschnitte (25a, 25b) aufweist, die integral miteinander ausgebildet sind, wobei jeder flache Abschnitt einen stumpfen Winkel in Bezug auf die benachbarten Abschnitte bildet, um die rohrförmige Wand (24) zu bilden.

7. Losdrehsicherungsabdeckungssystem nach Anspruch 5 oder 6 in Abhängigkeit von Anspruch 3, wobei die Außenseite der rohrförmigen Wand mehrere Außenränder (20a) aufweist, von denen sich die flexiblen gekrümmten Wände (28) radial erstrecken.

8. Losdrehsicherungsabdeckungssystem nach einem der vorangehenden Ansprüche, wobei der Endabschnitt (16a) in der Draufsicht betrachtet C-förmig ist.

9. Losdrehsicherungsabdeckungssystem nach einem der vorangehenden Ansprüche, wobei der Ansatz (16) in der Draufsicht betrachtet durch zwei gekrümmte Seiten, die in einem Abstand voneinander angeordnet sind, der im Wesentlichen dem Durchmesser des rohrförmigen Körpers (12) gleicht, und durch eine C-förmige Endseite begrenzt ist, die den Endabschnitt definiert.

## Revendications

1. Système de couvercle anti-dévissage (1) pour têtes (3) de boulons (2) utilisé pour monter fixe une jante de roue (4) d'un véhicule utilitaire à un moyeu et comprenant une pluralité d'éléments de couvercle (10) dont chacun est approprié pour être couplé à une tête (3) de boulon respective pour la recouvrir, les boulons (2) étant appropriés pour venir en prise avec des trous traversants (8) respectifs agencés le long d'un trajet circulaire (C) d'une partie (6) de la jante de roue (4),
**caractérisé en ce que** chaque élément de couvercle (10) comprend :
un corps tubulaire (12) définissant une cavité interne (14) coaxiale à un axe (H) et un appendice intégral (16) qui s'étend radialement à partir d'une partie avant d'un bord périmétrique (12b) du corps tubulaire (12) vers l'extérieur du corps tubulaire (12) ;
un élément de capuchon (18) en forme de coupelle approprié pour être logé à l'intérieur du corps tubulaire et définissant un siège interne ouvert vers l'extérieur et approprié pour loger, d'une manière angulairement stable, une tête (3) de boulon respective qui est couplée à l'élément de capuchon ;
ledit élément de capuchon (18) en forme de coupelle étant doté d'un moyen de connexion qui permet une rotation du corps tubulaire par rapport à l'élément de capuchon (18) selon une unique direction de rotation (R) ;
ledit appendice (16) présente une partie d'extrémité (16a) configurée pour venir en butée contre une partie arrière (12b) du corps tubulaire (12) adjacent d'une manière telle que les éléments de couvercle (10) agencés sur leur tête de boulon respective forment une chaîne continue d'éléments de couvercle agencés en contact les uns avec les autres pour former une couronne d'éléments de couvercle (10) interconnectés dans lequel chaque élément de couvercle exerce une force sur l'élément de couvercle adjacent de manière à produire une force qui se développe le long dudit trajet circulaire (C) qui garde les éléments de couvercle (10), qui sont tous légèrement comprimés, en contact les uns avec les autres ; la couronne des éléments de couvercle empêche la rotation et ainsi le dévissage des boulons.

2. Système de couvercle anti-dévissage selon la revendication 1, dans lequel ledit moyen de connexion est d'un type souple.

3. Système de couvercle anti-dévissage selon la revendication 2, dans lequel ledit moyen de connexion souple comprend une pluralité de parois incurvées (28) souples s'étendant vers l'extérieur à partir de l'élément de capuchon (18) et qui sont dotées de bords d'extrémité (29) libres appropriés pour s'encliqueter dans des rainures (19) respectives faites sur une paroi interne dudit corps tubulaire (12).

4. Système de couvercle anti-dévissage selon la revendication 3, dans lequel le corps tubulaire (12) cylindrique présente une paroi interne sur laquelle une pluralité de nervures droites (17) sont faites, qui s'étendent le long de l'axe H et présentent une section triangulaire, créant ainsi lesdites rainures (19) délimitées par une paroi de verrouillage (19a) qui s'étend dans une direction radiale et une paroi inclinée (19b) inclinée par rapport à la paroi de verrouillage (19a) ; la rotation de l'élément de capuchon (18) selon la direction de rotation (R) possible implique le glissement des bords d'extrémité (29) libres sur les parois inclinées (19b) et la déviation associée des parois incurvées (28) souples ; la rotation de l'élément de capuchon (18) selon une direction (B) opposée est empêchée puisque les bords d'extrémité (29) libres viennent en butée contre les parois de verrouillage (19a).

5. Système de couvercle anti-dévissage selon l'une quelconque des revendications précédentes, dans lequel ledit élément de capuchon façonné comprend une paroi de base (22) plate sensiblement circulaire qui, en cours d'utilisation, est appropriée pour être agencée transversalement audit axe (H) et une paroi tubulaire (24) qui est d'un seul tenant avec la paroi de base (22) et est appropriée pour être agencée, en cours d'utilisation, coaxialement audit axe (H) ; la paroi tubulaire (24) définissant de manière interne ledit siège interne (20), qui est configuré pour loger une tête (3) correspondante d'une manière angulairement stable.

6. Système de couvercle anti-dévissage selon la revendication 5, dans lequel la paroi tubulaire comprend une pluralité de parties plates (25a, 25b) adjacentes d'un seul tenant les unes avec les autres, chaque partie plate formant un angle obtus par rapport aux parties adjacentes pour former la paroi tubulaire (24).

7. Système de couvercle anti-dévissage selon la revendication 5 ou 6 dépendante de la revendication 3, dans lequel l'extérieur de la paroi tubulaire présente une pluralité de bords externes (20a) à partir desquels les parois incurvées (28) souples s'étendent radialement.

8. Système de couvercle anti-dévissage selon l'une quelconque des revendications précédentes, dans lequel ladite partie d'extrémité (16a) est en forme de C en vue en plan.

9. Système de couvercle anti-dévissage selon l'une quelconque des revendications précédentes, dans lequel l'appendice (16), en vue en plan, est délimité par deux côtés incurvés espacés d'une distance sensiblement égale au diamètre du corps tubulaire (12) et par un côté d'extrémité en forme de C qui définit la partie d'extrémité.
